# EUROPÄISCHE PATENTSCHRIFT

(11) **EP 0 741 224 B1**
(45) Veröffentlichungstag und Bekanntmachung des Hinweises auf die Patenterteilung: **20.02.2002**
(21) Anmeldenummer: 96106319.5
(22) Anmeldetag: 23.04.1996
(51) Int. Cl.: E05D 15/06

(54) **Schiebetür mit reibungsarmer Führung**
Sliding door with low friction guide
Porte coulissante avec dispositif de guidage à faible frottement

(30) Priorität: 05.05.1995 CH 129695
(43) Veröffentlichungstag der Anmeldung: 06.11.1996
(73) Patentinhaber: INVENTIO AG, CH-6052 Hergiswil (CH)
(72) Erfinder: de Angelis, Claudio, Dipl. Ing., 6004 Luzern (CH)

(56) Entgegenhaltungen:
- DE-A- 1 784 392
- DE-A- 4 016 948
- US-A- 3 334 442

## Beschreibung

Die Erfindung betrifft eine Schiebetür mit mindestens einem Türflügel, der oben entlang einer Schiene mittels Rollen getragen und geführt ist und unten mittels am Türflügel und stationär angeordneten Magneten mindestens geführt ist, wobei gegenüberliegende Magnetpole gleichnamig sind und eine die Führung des Türflügels bewirkende Abstosskraft erzeugen.

Die erfindungsgemässe Schiebetür, wird beispielsweise in Gebäuden als Zimmertür, Duschkabinenabschluss oder auch in Fahrzeugen, Aufzügen und Transportmitteln aller Art verwendet.

Bisher bekannte Schiebetüren weisen meist mechanische Führungen auf, die eine mehr oder weniger große Reibung aufweisen. Bei längerem Gebrauch kommt es infolge mangelhafter Schmierung oder Verschmutzung häufig zu Schleifgeräuschen, Schwergängigkeit oder schliesslich gar Klemmen der Tür. Montagefehler oder mangelhaftes Einstellen der Tür können schon von vorne herein zu diesen unerwünschten Effekten führen. Als Folge werden zuweilen sogar Führungselemente verbogen oder aus ihrer Befestigung gelöst.

Aus der Offenlegungsschrift DE 1 784 392 ist eine Schiebetür bekannt geworden, bei der ein an der Unterkante der Schiebetür angeordneter Schuh durch eine magnetische Kraft schwimmend in einem Rahmen angeordnet ist. Hierzu sind mehrere langgestreckte Dauermagnete innerhalb des Schuhes angeordnet, welche in Längsrichtung verlaufende langgestreckte Nord- und Südpole aufweisen. Diesen Magneten liegen entsprechend gleich starke Magnete an der Oberseite einer Schwelle gegenüber. Diese Magnete liegen mit ihren Polen unter den gleichnamigen Polen der Magnete des Schuhes, sodass eine abstossende und damit eine schwimmende Wirkung erzielbar ist.

Ein Nachteil der bekannten Einrichtung liegt darin, dass die schwimmende Wirkung durch die mechanische Seitenführung gestört wird. Die durch Reibung entstehende Kraft der Seitenführung wirkt sich negativ auf einen geradlinigen Verlauf der Schiebetür aus. Die Schiebetür kann sich dabei bei ungünstigen Bedingungen verklemmen.

Aus der Offenlegungsschrift DE 40 16 948 ist eine Schiebetür mit berührungsfrei zusammenwirkenden stationären und beweglichen Trag- und Führungselementen bekannt geworden. Stationäre und bewegliche Magnete sind einander mit gleichnamigen Polen zugewandt, wobei Abstosskräfte auftreten, welche einerseits vertikale Komponenten zur Abstützung der Tür und horizontale Komponenten zur Führung und Zentrierung der Tür aufweisen. Die einzelnen Magnete sind V-förmig so angeordnet, dass sich die durch die Magnetpole verlaufenden Achsen mit der Mittellinie des Türflügels schneiden.

Aus der Patentschrift US 3 334 442 ist eine Magnetführung für eine Schiebetür bekannt geworden, bei der die Magnete V-förmig angeordnet sind und vertikale und horizontale Führungskräfte erzeugen.

Nachteilig bei der V-förmigen Anordnung der Magnete ist der grosse Platzbedarf für die winklig angeordneten Magnete. Der Kopfteil wie auch die Schwelle der Tür verlangen voluminöse Konstruktionen, die in bestimmten Fällen nicht einsetzbar sind.

Hier will die Erfindung Abhilfe schaffen. Die Erfindung, wie sie in den Ansprüchen gekennzeichnet ist, löst die Aufgabe, die Nachteile der bekannten Einrichtungen zu vermeiden und eine Schiebetür zu schaffen, die leichtgängig ist und keiner Schmierung bedarf und deren Montage und Einstellung vereinfacht wird.

Die Führungen der Schiebetür arbeiten berührungslos und weisen jeweils Magnete bzw. Magnetleisten mit einander zugewandten gleichnamigen Polen an Türflügel und Türschwelle auf. Da sich gleichnamige Magnetpole gegenseitig abstossen, gleitet der Türflügel berührungslos, geräuschlos und dennoch präzise geführt.

Die durch die Erfindung erreichten Vorteile sind im wesentlichen darin zu sehen, dass praktisch kein Verschleiss auftritt. Wegen der ständig wirkenden magnetischen Abstossung, die um so größer wird je geringer der Abstand zwischen den Führungselementen ist, wirkt die Magnetführung gegenüber Seitenkräften zugleich dämpfend. Dämpfend wirkt sich ausserdem die Massenträgheit des Türblattes aus. Je nach Anordnung der Magnete kann die Führung horizontal, vertikal oder in beiden Richtungen wirken. Bei auch vertikaler Führung steht die Tür gleichsam auf einem Magnetkissen, die üblichen Tragrollen an der Türoberkante können gegebenenfalls entfallen.

Im folgenden wird die Erfindung anhand von lediglich einen Ausführungsweg darstellenden Zeichnungen näher erläutert. Es zeigen:
- Fig. 1: eine Schiebetür mit einer erfindungsgemässen Magnetführung,
- Fig. 2: Einzelheiten der Magnetführung gemäss Fig. 1,
- Fig. 3: eine Schiebetür mit einer Magnetführung in horizontaler und vertikaler Richtung,
- Fig. 4: Einzelheiten der Magnetführung gemäss Fig. 3,
- Fig. 5: eine Schiebetür mit einem Ausführungsbeispiel der Magnetführung in horizontaler und vertikaler Richtung und
- Fig. 6: Einzelheiten der Magnetführung gemäss Fig. 5.

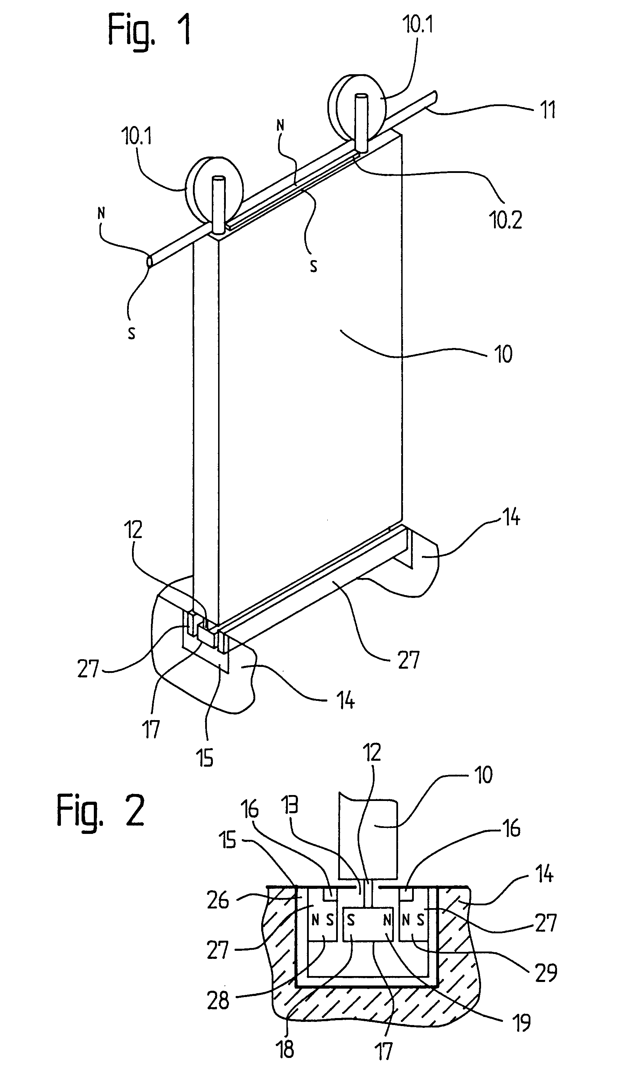

In den Fig. 1 bis 6 ist mit 10 ein Türflügel einer Schiebetür bezeichnet, die auch mehrere Türflügel 10 aufweisen kann. Der Türflügel 10 ist mittels Rollen 10.1 entlang einer oberen Schiene 11 verfahrbar. An der Unterkante des Türflügels 10 greift ein Führungsschwert 12 in einen Schlitz 13 einer Führungsschiene 15 ein, die in einer Türschwelle 14 angeordnet ist. Zum Schutz vor einfallendem Schmutz ist der Schlitz 13 möglichst eng. Zusätzlich können vor und hinter dem Schlitz 13 Abscheidemagnete 16 angeordnet sein, damit magnetisch beeinflussbare Schmutzteilchen angezogen werden. An dem Führungsschwert 12 ist eine erste Magnetleiste 17 mit ersten Polen 18, 19 befestigt mit quer zum Türflügel 10 ausgerichteten inneren magnetischen Feldlinien. Die ersten Pole 18, 19 sind als freie Stirnflächen an den Längsseiten der ersten Magnetleiste 17 und in senkrechter Ausrichtung längs der Türunterkante ausgebildet. Den ersten Polen 18, 19 gegenüber sind in der Führungsschiene 15 als Führungsschienen wirkende zweite Magnetleisten 27 mit zweiten Polen 28, 29 eingesetzt, wobei sich immer gleichnamige Pole, also die Südpole 18 und 28, sowie die Nordpole 19 und 29 einander gegenüber liegen und den Türflügel 10 seitlich führen. Die Magnetleisten 17, 27 sind am Türschwert 12 bzw. an der Türschwelle 14 vorteilhaft so befestigt, daß die beiden Pole eines Magneten voneinander magnetisch isoliert sind, d.h. die äußeren Feldlinien zwischen Nord- und Südpol sind nicht innerhalb von magnetischen oder magnetisierbaren Bauteilen, sondern über Luftspalte oder unmagnetische Halterungen geschlossen. Ein magnetischer Kurzschluß zwischen den beiden Polen eines Magneten, z.B. den Polen 18 und 19 der Magnetleiste 17, würde die abstoßenden Kräfte nach außen schwächen. Führungsschwert 12 wie Türschwelle 14 sind - soweit sie beide Pole 18, 19, 28, 29 eines Magneten berühren - aus Kunststoff oder Aluminium gefertigt, vorzugsweise jedenfalls aus einem nichtmagnetischen Werkstoff.

Hingegen ist ein magnetischer Rückschluß zwischen den ungleichnamigen rückseitigen Polen der beiden schwellenseitigen zweiten Magnetleisten 27 erwünscht, indem die dem Schwert 12 abgewandten Pole der Magnete 28, 29 beispielsweise durch einen eisernen Bügel 26 in der Türschwelle 14 verbunden sind. Dasselbe gilt für die ersten Magnetleisten 17 am Führungsschwert 12, sofern davon zwei vorgesehen sind.

Die Abscheidemagnete 16, die auch einstückig mit den zweiten Magnetleisten 27 sein können, halten magnetische Schmutzteilchen von den abstoßend wirkenden Polstirnflächen der Magnetleisten 17, 27 fern. In diesem Fall wirkt die sowohl Nord- als auch Südpol aufweisende Längsseite der Magnetleisten 27.

Um die für die magnetische Gleitführung erforderlichen Magnetkräfte zu erhalten, werden vorzugsweise Magnetleisten aus hartmagnetischen Legierungen oder oxydische Dauermagnetwerkstoffe verwendet. Auch leicht bearbeitbare kunststoffgebundene Magnete, beispielsweise mit Bariumferritpulver können verwendet werden. Diese Ausführung hat den zusätzlichen Vorteil hervorragender Notgleiteigenschaften. Über die Wahl der wirksamen Breite der Leisten läßt sich die Abstosskraft zusätzlich variieren. Die erforderliche Stärke der Magneten hängt in erster Linie vom Gewicht der Tür und den zu erwartenden Querkräften ab. Bei leichten Türen innerhalb von Gebäuden reichen schon schwächere, schmale oder auch unterbrochene Magnetleisten.

Die Magnetleisten müssen so ausgelegt werden, dass die Feldstärke H, die zur Entmagnetisierung benötigt wird, größer als die magnetische Flussdichte B der gegenüberliegenden gleichnamigen Magnetleiste ist. Um ein grösstmögliches Energieprodukt zu erhalten, kann es vorteilhaft sein, die Magnetleisten in kürzere Abschnitte zu unterteilen mit kleinen, vorzugsweise gegensinnig schräg verlaufenden Zwischenräumen. Damit wird in jeder Türstellung eine annähernd gleiche Abstossung erreicht.

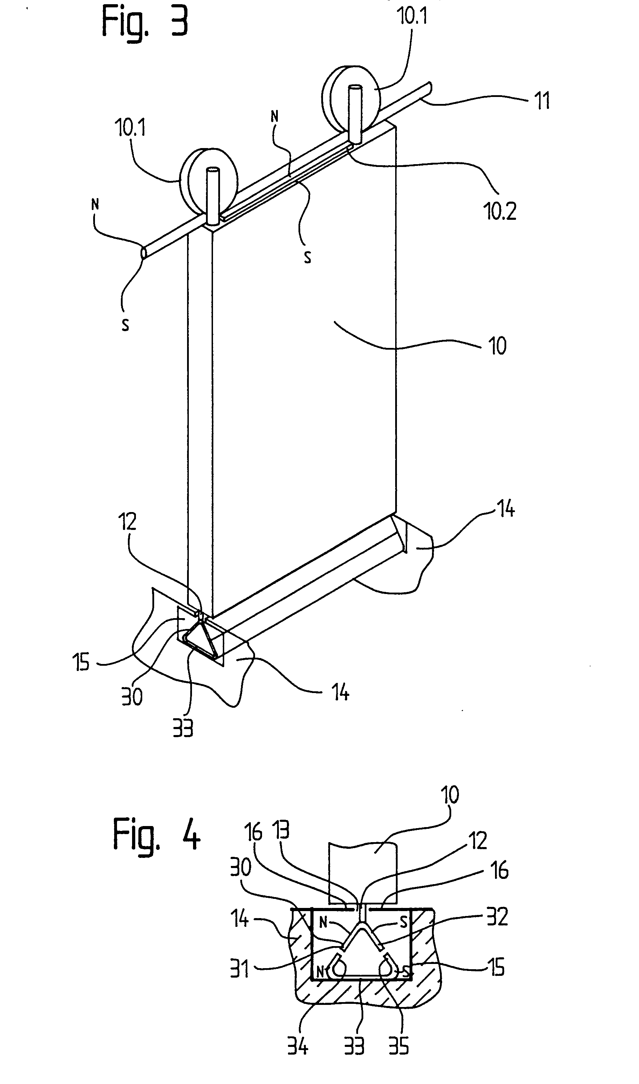

Die in den Figuren 3 und 4 gezeigte Führung kann ausser der Seitenführung gleichzeitig der unteren Abstützung des Türflügels 10 dienen. Das Führungsschwert 12 weist eine dritte Magnetleiste 30 in der Form eines Winkeleisens auf. Wiederum sind magnetische dritte Pole 31, 32 an den Längsseiten der dritten Magnetleiste 30 ausgebildet, so dass die als Stirnflächen ausgebildeten dritten Pole 31, 32 in einem Winkel von etwa 90° einander abgewandt angeordnet sind.

Eine gegenüberliegende vierte Magnetleiste 33 in der Führungsschiene 15 ist hufeisenförmig oder kreisförmig gebogen und mit als Stirnflächen ausgebildeten vierten Polen 34, 35 versehen, die in einem Winkel von etwa 90° einander zugewandt sind. Neben einer quer zum Türflügel 10 wirkenden horizontalen Abstosskraft üben die Magnetleisten 30, 33 zusätzlich eine vertikal nach oben gerichtete Kraft aus.

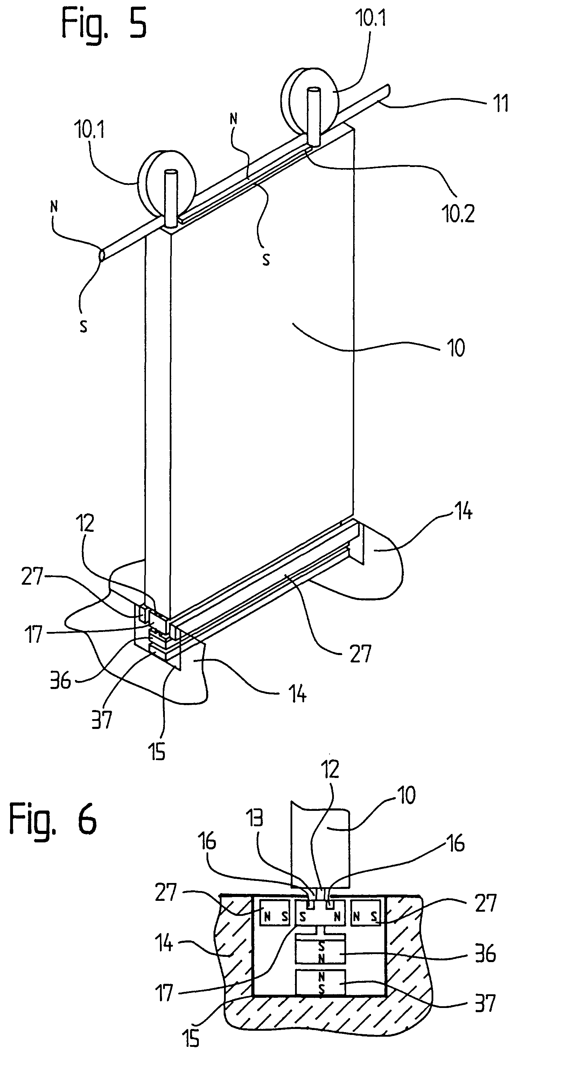

In den Figuren 5 und 6 ist eine fünfte Magnetleiste 36 unterhalb des Führungsschwerts 12 angeordnet. Am Führungsschwert 12 ist gegenüberliegend eine sechste Magnetleiste 37 angeordnet. Die gegenüberliegenden Pole der fünften Magnetleiste 36 und der sechsten Magnetleiste 37 sind gleichnamig. Diese Anordnung übt eine vertikal nach oben gerichtete Kraft auf den Türflügel 10 aus. Damit werden die Auflagekräfte an der oberen Führung des Türflügels 10 vermindert. Im gezeigten Beispiel mit Rollen 10.1 wird der Rollwiderstand reduziert. Die gleiche Wirkung wird mit mindestens einer an der Oberkante des Türflügels 10 angeordneten Magnetleiste 10.2 erreicht, die mit der als Magnet ausgebildeten oberen Schiene 11 zusammenwirkt. Der damit verbundene Vorteil liegt wie schon beim Beispiel nach den Figuren 3 und 4 in einer weiteren Geräuschminderung. Auch können die Lagerbauteile schwächer oder kostengünstiger ausgelegt werden.

Anstatt einstückiger durchgehender Magnetleisten können auch kürzere, entweder aneinanderstoßende oder durch nicht magnetische Zwischenstücke voneinander getrennte Magnetteilleisten verwendet werden. Die Zwischenstücke sind vorzugsweise schmaler als die Magnetteilleisten. Besonders vorteilhaft ist das Einlegen von Magnetstücken in Ausstanzungen oder senkrechte Schlitze des Schwertes. Gegen Herausfallen können sie durch angeschraubte Leisten gesichert werden.

Die vorangehend beschriebenen in horizontaler Richtung wirkenden Magnetführungen können außer an der Türunterkante selbstverständlich auch an der Türoberkante vorgesehen werden. Für gebogene Türflügel werden entsprechend gebogene Führungen verwendet, dabei wären auch die Magnetleisten bogenförmig auszubilden, wofür sich kunststoffgebundene flexible Magnete hervorragend eignen. Anstatt eines Schlitzes im Boden, kann auch eine beispielsweise halbkreisförmige Magnetleiste auf den Boden aufgelegt bzw. aufgeklebt werden. Als Gegenstück befindet sich eine konkav geformte Magnetleiste unten am Türflügel. Die wirksame Flußdichte könnte erforderlichenfalls durch eine hinter dem Magneten angebrachte Metallplatte verstärkt werden. Besonders hohe Flussdichten können mit Seltene-Erden-Magneten erzielt werden.

## Patentansprüche

1. Kombination bestehend aus einer Schiebetür mit mindestens einem Türflügel (10), der oben entlang einer Schiene (11) mittels Rollen (10.1) getragen und geführt ist und unten mittels am Türflügel (10) und stationär angeordneten Magneten mindestens geführt ist, sowie einer in einer Türschwelle (14) angeordneten Führungsschiene (15), wobei gegenüberliegende Magnetpole gleichnamig sind und eine die Führung des Türflügels (10) bewirkende Abstosskraft erzeugen,
**dadurch gekennzeichnet,**
**dass** die Magnete (17,27,30,33,36,37) in der in der Türschwelle (14) angeordneten Führungsschiene (15) angeordnet sind, wobei ein unten am Türflügel (10) angeordnetes Führungsschwert (12) durch einen Schlitz (13) der Führungsschiene (15) in die Führungsschiene (15) reicht, wobei am führungsschienenseitigen Ende des Führungsschwertes (12) die Magnete (17,30) des Türflügels (10) angeordnet sind.

2. Schiebetür nach den Ansprüchen 1 oder 2,
**dadurch gekennzeichnet,**
**dass** die Magnete als parallel zur Bewegungsrichtung des Türflügels (10) angeordnete stangenförmige Magnetleisten (17,27) ausgebildet sind und an den gegenüberliegenden Längsseiten unterschiedliche Pole (18,19,28,29) aufweisen.

3. Schiebetür nach einem der vorhergehenden Ansprüche,
**dadurch gekennzeichnet,**
**dass** die Pole der Magnetleisten (17,27) an Führungsschiene (15) und Führungsschwert (12) magnetisch voneinander isoliert angeordnet sind.

4. Schiebetür nach einem der vorhergehenden Ansprüche,
**dadurch gekennzeichnet,**
**dass** am Führungsschwert (12) mindestens eine in der Bewegungsrichtung verlaufende Magnetleiste (36) unterhalb der am Führungsschwert (12) angeordneten Magnetleiste (17) vorgesehen ist und
**dass** mindestens eine an der Führungsschiene (15) angeordnete Magnetleiste (37) vorgesehen ist, die zusammen mit der am Führungsschwert (12) angeordneten Magnetleiste (36) eine auf den Türflügel (10) wirkende Hebekraft erzeugt.

5. Schiebetür nach Anspruch 1,
**dadurch gekennzeichnet,**
**dass** mindestens eine abgewinkelte Magnetleiste (30) am Führungsschwert (12) angeordnet ist, wobei Stirnflächen der Pole (31,32) schräg nach unten gerichtet sind und
**dass** in der Führungsschiene (15) der abgewinkelten Magnetleiste (30) gegenüberliegend mindestens eine hufeisenförmig ausgebildete Magnetleiste (33) angeordnet ist, wobei die Stirnflächen der Pole (34,35) parallel zu den Stirnflächen der gleichnamigen Pole (31,32) der abgewinkelten Magnetleiste (30) verlaufen.

6. Schiebetür nach einem der vorangehenden Ansprüche,
**dadurch gekennzeichnet,**
**dass** den Magnetleisten (17,27,30,33) vorgelagert mindestens ein Abscheidemagnet (16) vorgesehen ist, der magnetisch beeinflussbare Schmutzteilchen anzieht und von den Magnetleisten (17,27,30,33,36,37) fernhält.

7. Schiebetür nach einem der vorangehenden Ansprüche,
**dadurch gekennzeichnet,**
**dass** als Werkstoff für die Magnetleisten (17,27,30, 33,36,37) hartmagnetische Legierungen, oxydische Dauermagnetwerkstoffe oder kunststoffgebundenes Ferritpulver vorgesehen ist.

## Claims

1. Combination consisting of a sliding door with at least one door panel (10), which is carried and guided at the top along a rail (11) by means of rollers (10.1) and is at least guided at the bottom by means of magnets arranged at the door panel (10) and in stationary position, as well as a guide rail (15) arranged in a door threshold (14), wherein mutually opposite magnet poles are of like polarity and generate a repelling force effecting the guidance of the door panel (10), **characterised in that** the magnets (17, 27, 30, 33, 36, 37) are arranged in the guide rail (15) arranged in the door threshold (14), wherein a guide tongue (12) arranged at the bottom of the door panel (10) extends through a slot (13) of the guide rail (15) into the guide rail (15), wherein the magnets (17, 30) of the door panel (10) are arranged at the end of the guide tongue (12) at the guide rail side.

2. Sliding door according to claim 1 or claim 2, **characterised in that** the magnets are constructed as rod-shaped magnet strips (17, 27) arranged parallel to the movement direction of the door panel (10) and have different poles (18, 19, 28, 29) at the oppositely disposed longitudinal sides.

3. Sliding door according to one of the preceding claims, **characterised in that** the poles of the magnet strips (17, 27) are arranged at the guide rail (15) and guide tongue (12) to be magnetically insulated from one another.

4. Sliding door according to one of the preceding claims, **characterised in that** at least one magnet strip (36) extending in the direction of movement is provided at the guide tongue (12) below the magnet strip (17) arranged at the guide tongue (12) and that at least one magnet strip (37) arranged at the guide rail (15) is provided and together with the magnet strip (36) arranged at the guide tongue (12) produces a lifting force acting on the door panel (10).

5. Sliding door according to claim 1, **characterised in that** at least one angled magnet strip (30) is arranged at the guide tongue (12), wherein end faces of the poles (31, 32) are oriented obliquely downwardly, and that at least one magnet strip (33) constructed to be horseshoe-shaped is arranged in the guide rail (15) opposite the angled magnet strip (30), wherein the end faces of the poles (34, 35) extend parallel to the end faces of the poles (31, 32) of like polarity of the angled magnet strip (30).

6. Sliding door according to one of the preceding claims, **characterised in that** at least one stripper magnet (16) is provided premounted at the magnet strips (17, 27, 30, 33), which stripper magnet attracts the contaminating particles able to be magnetically influenced and remove them from the magnet strips (17, 27, 30, 33, 36, 37).

7. Sliding door according to one of the preceding claims, **characterised in that** hard-magnetic alloys, oxidic permanent magnet materials or synthetic material compound ferrite powder is provided as material for the magnet strips (17, 27, 30, 33, 36, 37).

## Revendications

1. Combinaison formée d'une porte coulissante avec au moins un battant de porte (10) qui est porté et guidé, en haut, à l'aide de galets (10.1) le long d'un rail (11) et qui est au moins guidé, en bas, à l'aide d'aimants disposés de manière stationnaire sur le battant (10), et d'un rail de guidage (15) disposé dans un seuil de porte (14), les pôles magnétiques situés les uns en face des autres étant de même nom et générant une force répulsive qui provoque le guidage du battant de porte (10),
**caractérisée en ce que** les aimants (17, 27, 30, 33, 36, 37) sont disposés dans le rail de guidage (15) placé dans le seuil de porte (14), une lame de guidage (12) disposée sous le battant de porte (10) traversant une fente (13) du rail de guidage (15) pour pénétrer dans celui-ci, et les aimants (17, 30) du battant de porte (10) étant disposés sur l'extrémité de la lame de guidage (12) qui est prévue côté rail de guidage.

2. Porte coulissante selon la revendication 1 ou 2, **caractérisée en ce que** les aimants sont conçus comme des barres magnétiques en forme de tiges (17, 27) parallèles au sens de déplacement du battant de porte (10), et présentent sur leurs côtés longitudinaux opposés des pôles différents (18, 19, 28, 29).

3. Porte coulissante selon l'une des revendications précédentes, **caractérisée en ce que** les pôles des barres magnétiques (17, 27) sont disposés sur le rail de guidage (15) et sur la lame de guidage (12) en étant isolés magnétiquement les uns des autres.

4. Porte coulissante selon l'une des revendications précédentes, **caractérisée en ce qu'**il est prévu sur la lame de guidage (12), dans le sens de déplacement, au moins une barre magnétique (36) qui est disposée au-dessous de la barre magnétique (17) placée sur la lame de guidage (12), et **en ce qu'**il est prévu au moins une barre magnétique (37) qui est disposée sur le rail de guidage (15) et qui, avec la barre magnétique (36) disposée sur la lame de guidage (12), génère une force de soulèvement agissant sur le battant de porte (10).

5. Porte coulissante selon la revendication 1,
**caractérisée en ce qu'**au moins une barre magnétique coudée (30) est disposée sur la lame de guidage (12), les surfaces frontales des pôles (31, 32) étant dirigées en biais vers le bas, et **en ce qu'**il est prévu dans le rail de guidage (15), en face de la barre magnétique coudée (30), au moins une barre magnétique en fer à cheval (33), les surfaces frontales des pôles (34, 35) étant parallèles aux surfaces frontales des pôles de même nom (31, 32) de la barre magnétique coudée (30).

6. Porte coulissante selon l'une des revendications précédentes, **caractérisée en ce qu'**il est prévu, monté avant les barres magnétiques (17, 27, 30, 33), au moins un aimant de séparation (16) qui attire les particules de saleté influençables magnétiquement et les éloigne des barres magnétiques (17, 27, 30, 33, 36, 37).

7. Porte coulissante selon l'une des revendications précédentes, **caractérisée en ce qu'**il est prévu comme matière pour les barres magnétiques (17, 27, 30, 33, 36, 37) des alliages magnétiques durs, des matières magnétiques permanentes à base d'oxyde ou de la poudre de ferrite à liant synthétique.
